# EUROPÄISCHE PATENTSCHRIFT

(11) **EP 1 376 794 B1**
(45) Veröffentlichungstag und Bekanntmachung des Hinweises auf die Patenterteilung: **14.09.2016**
(21) Anmeldenummer: 03013560.2
(22) Anmeldetag: 13.06.2003
(51) Int. Cl.: H02B 1/16

(54) **Schrank, insbesondere Elektro-Schaltschrank**
Cabinet, especially an electric cabinet
Armoire, notamment une armoire électrique

(30) Priorität: 14.06.2002 DE 10226633
(43) Veröffentlichungstag der Anmeldung: 02.01.2004
(73) Patentinhaber: Siemens Aktiengesellschaft, 80333 München (DE)
(72) Erfinder: Müller, Gerhard, 93492 Triffelstein (DE)

(56) Entgegenhaltungen:
- DE-U- 8 903 815
- US-A- 6 118 071

## Beschreibung

Die vorliegende Erfindung bezieht sich auf einen Schrank, insbesondere einen Elektro-Schaltschrank, mit einer Eckenstrebe, mit zumindest zwei darin enthaltenen Nuten und mit in die Nuten einbringbaren einander benachbarten Seitenwänden aus elektrisch leitendem Material.

Bisher existieren bereits Elektroschaltschränke mit Seitenwänden, die miteinander durch Steckverbinder verbunden werden. Der Begriff Elektro-Schaltschrank umfasst im Folgenden u.a. Verteilerschränke sowie Schaltkästen und Verteilerkästen, in denen elektrische Geräte installiert sind. Die Elektroschaltschränke können freistehend oder in Wänden eingebaut sein. Auch besteht die Möglichkeit, die Elektroschaltschränke an den Wänden zu befestigen. Da in DIN-Normen eine definierte elektrische Leitung von einer Seitenwand zur anderen und von einer Seitenwand zur nächsten, die auch eine Rückwand sein kann, definiert und gefordert ist, werden in bestehenden Lösungen Anschweißteile an die Seitenwände aufgebracht und an den Anschweißteilen dann Kabel zur Sicherstellung der elektrischen Leitfähigkeit angebracht. Dies ist ein sehr arbeitsintensiver Vorgang, da die Einschweißteile separat auf die Seitenwände aufgeschweißt werden müssten, was zum einen sehr lange dauert und zum anderen erhöhte Werkzeuganforderungen an die Montagemannschaft stellt.

Üblicherweise werden die Elektroschaltschränke erst vor Ort aufgestellt um mit den Geräten bestückbar zu sein. Dabei werden die Einzelteile der Elektroschränke miteinander vernietet oder verschraubt. Zum Zusammenbau sind einerseits spezielle auf den Elektroschrank abgestimmte Befestigungsmittel, wie Schrauben oder Nieten, oder Anschweißteile zur Sicherstellung der elektrischen Leitfähigkeit, und andererseits, wie Bohrer oder Schrauber, notwendig.

Gerade bei Elektroschränken, die in Entwicklungsländer oder in Länder der Dritten Welt verschickt und dort aufgebaut werden, ist dies jedoch nachteilig, da in diesen Ländern meist nicht ausreichend ausgebildetes Personal oder ausreichend Werkzeug zur Verfügung steht, um komplexe Arbeiten durchzuführen.

Wenn in bestehenden Lösungen somit die Seitenwände aneinander befestigt werden, so sind bisher Schweißgeräte, Elektroden, Schrauben, Zangen, Schraubendreher und ähnliche Werkzeuge notwendig.

Bei bestehenden Ausführungen entsprechend dem Stand der Technik sind somit vor Ort zahlreiche Arbeitsschritte mit entsprechendem Werkzeug durchzuführen, die dementsprechend kostenintensiv sind.

Aus der deutschen Patentanmeldung DE 10104214 ist ein Elektro-Schaltschrank bekannt, der eine Eckenstrebe aus elektrisch nicht leitendem Material aufweist, in die zumindest zwei Seitenwände einsetzbar sind, wobei allerdings eine leitende Verbindung zwischen den Seitenwänden durch die oben beschriebenen Anschweißteile und damit befestigten Kabel erbracht werden muss. Somit sind auch hier noch zahlreiche Werkzeuge und hohes Ausbildungsniveau der Montagemannschaft von Nöten.

Es somit Aufgabe der vorliegenden Erfindung, eine elektrische Leitung zwischen Seitenteilen eines Elektro-Schaltschrankes ohne den Einsatz von zahlreichen Werkzeugen oder ohne einen vorausgesetzten hohen Ausbildungsstandes der Montagemannschaft sicherzustellen.

Diese Aufgabe wird erfindungsgemäß dadurch gelöst, dass die Eckenstrebe zumindest eine in zumindest eine der Nuten hineinragende Einsschuböffnung für eine Kontaktkralle mit mindestens einem Verschiebeweg aufweist, wobei sich die Kontaktkralle federnd, die Seitenwände elektrisch leitend verbindend, an den Seitenwänden abstützt.

Dies hat zum Vorteil, dass die vorgefertigten Seitenwände, Rückwände, Eckenstreben, Kontaktkrallen und Verschlusselemente standardisiert an den Montageort geliefert werden können. Der Zusammenbau der Einzelteile kann ohne große Erfahrung oder hohes Wissen des Monteurs geschehen. Der Monteur benötigt zur Montage der Einzelteile zu einem Schrank, insbesondere einem Elektro-Schaltschrank, keine besondere werkzeugliche Ausstattung. Noch dazu ist die Montage sehr schnell realisierbar, da die Einzelteile durch Steckverbindungen verbindbar sind. Es ist sogar möglich, einige oder alle Einzelteile bereits vormontiert an den Montageort zu schicken, wodurch wiederum Zeit bei der Montage und somit Kosten gespart werden. Die Fehlerquote wird dadurch weiter gesenkt. Ein weiterer Vorteil ist in der einfachen Gestaltung der Bauelemente zu sehen, da dadurch die Ausfallwahrscheinlichkeit der einzelnen Bauelemente weiter minimiert wird.

Dadurch, dass die Kontaktkralle in einer Einschuböffnung, mit einem Verschiebeweg, der in die Nuten der dort einbringbaren Seitenwände ragt, werden diese Seitenwände, durch die Kontaktkralle derart verkratzt, dass eine elektrisch leitende Verbindung zwischen Kontaktkralle und Seitenwand, und den zwei Seitenwänden über die Kontaktkralle geschaffen wird. Durch das Vorsehen eines federnden Eingriffes der Kontaktkralle in die Seitenwände, ist gewährleistet, dass nach der Aktion des Eingreifens der Kontaktkralle in die Seitenwände weiterhin ein Kontakt besteht. Die zwei Seitenwände können über die Kontaktkralle elektrisch leitend verbunden werden, wenn der Verschiebeweg der Einschuböffnung, in die Kontaktkralle gesteckt wird und in dann beide Nuten hineingreift.

Vorteilhafte Ausgestaltungen sind in den Unteransprüchen wiedergegeben.

Besonders vorteilhaft ist es, wenn in einer speziellen Ausgestaltungsform die Kontaktkralle in eine Einschuböffnung der Eckenstrebe einsteckbar ist und zumindest zwei Seitenwände miteinander leitend verbindet. Wenn die Kontaktkralle in die Einschuböffnung gesteckt wird, so wird dazu lediglich ein Hammer benötigt. Ein Hammer ist an jedem Montageort leicht zu finden oder ein Ersatzwerkzeug ist auf jeden Fall vorhanden. Organisatorisch ist dieses somit leicht zu bewerkstelligen.

Wenn in einer weiteren Ausgestaltungsform die Kontaktkralle zumindest zwei Schabkanten aufweist, die ein Teil des Materials der Seitenwände verletzen, so wird eine eventuell aufgebrachte Lackier- oder Schutzbeschichtung soweit abgetragen, dass das Metall der Seitenwände freigelegt wird und eine elektrische Leitung zwischen den Seitenwänden über die Kontaktkralle geschaffen wird.

Wenn die Kontaktkralle in einer besonderen Variante zumindest einen Vorsprung hat, der aus der Eckenstrebe hinausragend ausgestaltet ist, und mit einer an einer Einschuböffnungsseite der Eckenstrebe angebrachten Seitenwand, insbesondere einer Rückwand, eine leitende Verbindung herstellt, so können nicht nur Seitenwände sondern auch eine Rückwand miteinander in leitende Verbindung gebracht werden. Dadurch wird eine Erdung des Schaltschrankes ermöglicht. Die in DIN-Normen vorgeschriebene Erdung ist auch besonders in dieser Ausgestaltungsform erreichbar, wodurch eine Zulassung des Schaltschrankes in vielen Ländern ermöglicht wird.

Wenn in einer weiteren Ausgestaltungsform die Schabkanten der Kontaktkralle nach überwinden einer Widerstandskraft aufeinander zu beweglich sind, so wird eine Verbiegung der Kontaktkralle ermöglicht. Die Verbiegung der Kontaktkralle gewährleistet, dass, so die Widerstandskraft überwunden wird, eine Lösbarkeit zur Kontaktkralle realisiert wird. Es ist somit nicht nötig diese Verbindungsart zu zerstören, um die Seitenwände auszubauen. Es wird daher eine leichte Demontage ermöglicht.

In einer besonderen Ausgestaltungsart wird die Kontaktkralle in der Einschuböffnung verspannend ausgestaltet. Dass hat eine Sicherungsfunktion zur Folge. So fällt die Kontaktkralle beim Transport in vormontierten Zustand in der Einschuböffnung nicht aus dieser heraus. Zusätzlich dazu greift die Kontaktkralle aktiv in die Seitenwände ein und bleibt auch selbst nach dem Einbau aller Einzelteile in Eingriff.

Wenn in einer weiteren Ausgestaltungsform die Kontaktkralle aus einem Bauteil gefertigt ist, wird die Anzahl der einzelnen Bauelemente minimiert, wodurch die Gefahr der Verwechslung von Bauelementen sowie das Verlieren von einzelnen Bauelementen deutlich minimiert wird.

Wenn die Schabkanten mit je einer Fläche der Kontaktkralle verbunden sind, wird in dieser besonderen Ausführungsform ein Kratzen der Kontaktkralle auf den Leitenden ermöglicht, um eine eventuell aufgebrachte Anti-Oxidationsschicht von den Seitenwänden zu entfernen. Eine sichere elektrische Verbindung zwischen den Seitenwänden wird dadurch ermöglicht.

Besonders vorteilhaft ist es, wenn in einer weiteren Variante die Schabkanten zackig ausgestaltet sind. Dadurch Verhaken und Verklemmen sich die Schabkanten intensiv in dem Material der Seitenwände. Der beim hineinschieben der Schabkanten in das Material der Seitenwände entstehende Span kann und wird in den Zwischenräumen der Zacken hinausbefördert. Ein Blockieren der Schabkanten beim Einsetzen in die Einschuböffnung wird somit vermieden. Das ermöglicht eine einfache Montage der einzelnen Bauelemente.

Wenn in einer weiteren Variante zumindest ein Vorsprung durch eine Verbindungsausbildung der mit je einer Schaltkante versehenen Fläche gebildet ist, wird das Verklemmen der Kontaktkralle in die Einschuböffnung gefördert. Auch wird eine großflächige elektrische Leitung zwischen den Schabkanten der Kontaktkralle ermöglicht.

Wenn die Verbindungsausbildung in einer speziellen Abart der Erfindung zumindest eine Verbindungsfläche umfasst, wird in einer solchen Variante eine einfache Verbindungsart realisiert.

Wenn die Verbindungsausbildung in einer weiteren Ausgestaltungsform zumindest zwei Verbindungsflächen umfasst, wobei die eine Verbindungsfläche an die eine Kannte und die andere Verbindungsfläche anschließt und andererseits, die andere Verbindungsfläche zwischen der anderen Kante und der ersteren Verbindungsfläche angebracht ist, kann eine einfache Formgebung der Kontaktkralle realisiert werden. Diese einfache Ausgestaltung der Kontaktkrallen lässt die Kosten bei der Gestehung dieser Kralle minimieren.

Wenn die Kontaktkralle in einer weiteren Variante aus einem Bauteil aufgebaut ist, so können Logistikaufwendungen geringgehalten werden.

Besonders vorteilhaft ist es, wenn in einer weiteren Variante die Kontaktkralle aus Metall aufgebaut ist, da Metall ein auch in großen wie kleinen Stückzahlen zu beziehender günstiger Werkstoff ist.

Wenn Federstahl in einer weiteren Ausgestaltungsform für die Kontaktkralle als Ausgangsmaterial genutzt wird, so kann ein Einfedern der Kontaktkralle und der dadurch beschriebenen Vorteile erreicht werden.

Besonders Vorteilhaft ist es, wenn die Eckenstrebe aus nichtleitendem Material aufgebaut ist, da durch die Eckenstrebe selber nicht Elektrifiziert ist und dadurch unfallfrei berührt werden kann.

Um die Kosten bei der Gestehung der Eckenstrebe zu minimieren, ist es besonders vorteilhaft, wenn in einer weiteren Ausgestaltungsform Kunststoff als Material für die Eckenstrebe verwendet wird. Die Eckenstrebe kann dann in einen universellen, vielseitigen Spritzgussverfahren hergestellt werden.

Besonders Vorteilhaft ist es in einer weiteren Ausgestaltungsform, wenn die in die Einschuböffnung ragende Kontaktkralle zumindest teilweise in zumindest eine der Nuten ragt. Wir die Seitenwand in eine der Nuten eingeführt, so erfolgt eine elektrische Leitverbindung zwischen der Kontaktkralle und der Seitenwand sowie eine Verklemmung oder ein Festhalten der Seitenwand an einer vorab definierten Position.

Besonders vorteilhaft ist es in einer weiteren Variante ,wenn zumindest eine Schabkante in einer weiteren Ausgestaltungsform in eine Nut ragt, wodurch ein einfaches Verkrallen der Kontaktkralle in die Seitenwand ermöglicht wird. Die Seitenwand wird in die Nut oder die Kralle an der Seitenwand entlang hineingeschoben, wodurch sich ein Befestigen der Kontaktkralle in der Seitenwand schnell vor Ort bei der Montage realisieren lässt.

Wenn je eine Schabkante in eine Nut ragt, kann in dieser Ausgestaltungsform, je eine Schabkante mit je einer Seitenwand in Kontakt treten, wodurch eine elektrische Leitfähigkeit zwischen diesen beiden Seitenwänden einfach realisierbar ist. Durch ein Bauteil können somit zwei Seitenwände schnell und einfach verbunden werden. Das die Kontaktkralle symmetrisch aufgebaut ist, hat in einer weiteren Ausgestaltungsform den Vorteil, dass es völlig egal ist, in welcher Richtung die Kontaktkralle in die Einschuböffnung eingebracht wird.

Besonders vorteilhaft ist es in einer weiteren Variante wenn die Kontaktkralle zu zwei zueinander orthogonalen Ebenen entlang von Symmetrieachsen spiegelsymmetrisch aufgebaut ist. In dieser Ausführungsform ist der besondere Vorteil der einfachen Erzeugung der Kontaktkralle zu verzeichnen. Das Werkzeug zur Herstellung der Kontaktkralle kann dementsprechend einfach gestaltet sein.

Wenn die Kontaktkralle aus einem Stanz-Biegeteil aufgebaut ist, werden in dieser besonderen Ausführungsform Kosten gespart, da Stanz-Biegeteile industriell schnell, einfach, günstig und bewährt zu geringen Kosten hergestellt werden können.

Im Folgenden werden Ausführungsbeispiele der vorliegenden Erfindung anhand einer Zeichnung näher erläutert:
- Figur 1:: Eine perspektivische Frontansicht einer erfindungsgemäßen Eckstrebe,
- Figur 2: eine Unteransicht der Eckstrebe mit darin enthaltenen Nuten und einer Einschuböffnung,
- Figur 3: einen gespiegelten Schnitt durch die Eckenstrebe aus Figur 1 entlang der Linie III,
- Figur 4: eine Detailansicht IV aus Figur 3,
- Figur 5: die Detailansicht aus Figur 4 in einer Position entlang der Schnittlinie III aus Figur 1,
- Figur 6: einen Querschnitt durch die Eckstrebe aus Figur 1 entlang der Linie VI,
- Figur 7: eine perspektivische Ansicht einer Kontaktkralle,
- Figur 8: eine Schnittansicht entlang der Linie VIII durch die Kontaktkralle aus Figur 7,
- Figur 9: eine Schnittansicht durch die Eckenstrebe entlang der Linie VIIII aus Figur 7,
- Figur 10: eine Detailansicht gemäß Figur 4 mit eingebauter Kontaktklemme,
- Figur 11: einen Detailausschnitt entsprechend Figur 6 mit eingebauter Kontaktkralle,
- Figur 12: eine Draufsicht auf die Kontaktkralle von oben.

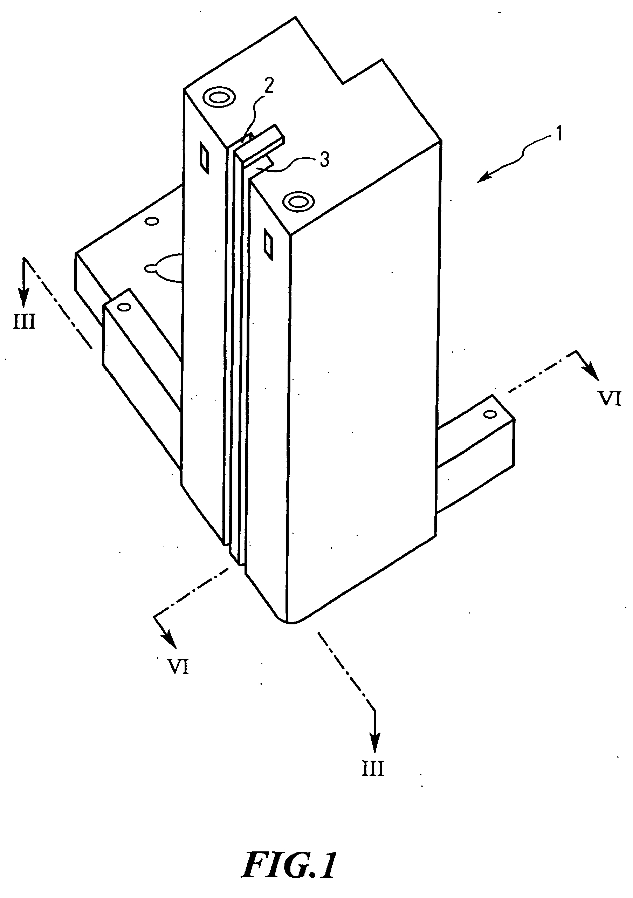

In Figur 1 ist die Eckenstrebe 1 dargestellt. Die Eckenstrebe 1 enthält zwei zueinander parallele Nuten 2 und 3. Die Nuten 2 und 3 sind formgleich.

Die Eckenstrebe 1 besteht aus einem nichtleitenden Material, in einer besonderen Ausführungsform aus Kunststoff. Die Eckenstrebe enthält Bohrungen zur Befestigung an einer Wand oder anderen Bauteilen. Die Eckenstrebe 1 ist einem besonderen Ausführungsbeispiel aus Kunststoff in Spritzgussverfahren hergestellt. In die Nuten 2 und 3 sind Seitenwände eines Schrankes einführbar. Diese Seitenwände eines Schrankes sind in diesem Ausführungsbeispiel Seitenwände eines Elektro-Schaltschrankes. Die Seitenwände bestehen aus einem elektrisch leitendem Material. In einem speziellen Ausführungsbeispiel sind die Seitenwände lackiert und/oder beschichtet.

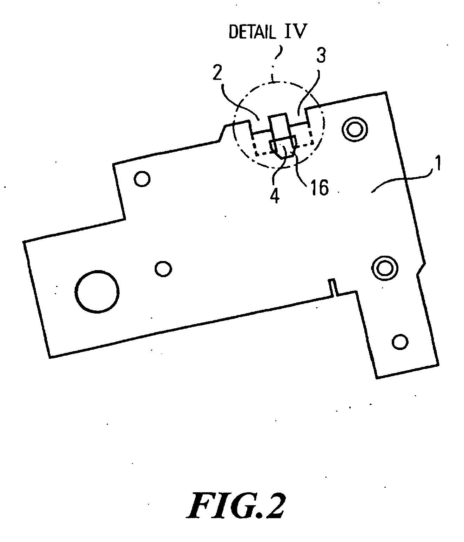

In Figur 2 ist eine Unteransicht der Eckstrebe 1 aus Figur 1 dargestellt. Es sind zahlreiche Öffnungen und/oder Bohrungen im Material der Eckenstrebe erkennbar. Auch sind die Nuten 2 und 3 zueinander parallel auf der Außenseite der Eckenstrebe 1 angebracht. Sie sind durch einen Steg aus demselben Material, wie die Eckenstrebe 1 und voneinander räumlich getrennt. In nächster Nähe zu der Nut 2 und zu der Nut 3 ist eine Einschuböffnung 4 angeordnet. Die Einschuböffnung 4 ist vieleckig ausgestaltet. Die Einschuböffnung ist im wesentlichen unterhalb der Oberkanten der Nuten 2 und 3 auf der Oberfläche der Eckenstrebe 1 angebracht. Ein Teil der Einschuböffnung 4 reicht in die Nut 2 hinein und ein Teil der Einschuböffnung 4 reicht in die Nut 3 hinein. Die Einschuböffnungsseite 16 ist auf der Unterseite der Eckenstrebe 1.

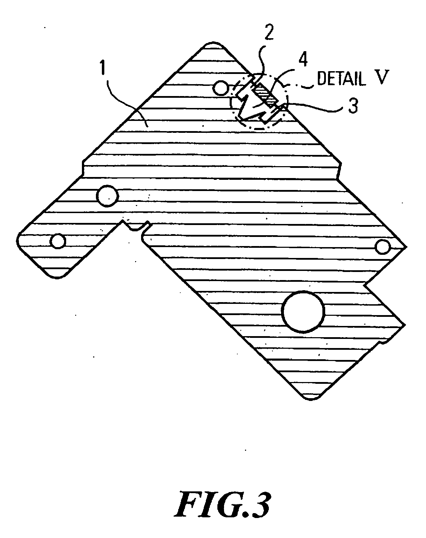

In Figur 3 sind die Verbindungen zwischen der Einschuböffnung 4 und der Nut 2 sowie der Einschuböffnung 4 und der Nut 3 erkennbar.

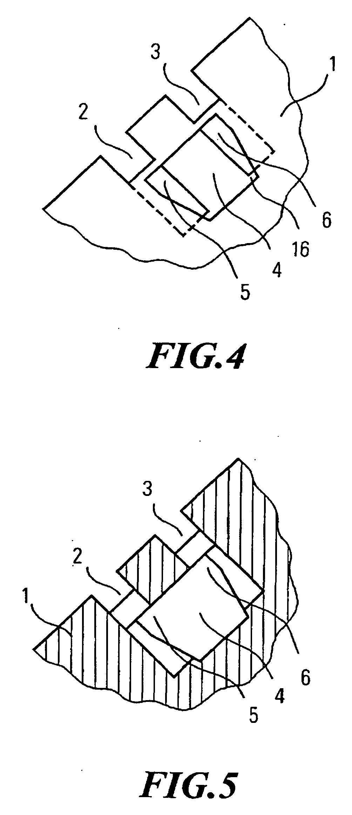

In Figur 5 ist die Detailansicht aus Figur 3 in einem größeren Maßstab dargestellt. Ein Verschiebeweg 6 und ein Verschiebeweg 5 als Teil der Einschuböffnung 4 ragen in das Innere der Nuten 2 und 3 hinein. Der Verschiebeweg 5 ragt in das Innere der Nut 2 hinein. Der Verschiebeweg 6 ragt in das Innere der Nut 3 hinein. Die Einschuböffnung 4 ist auf der Seite, die der Oberfläche der Eckenstrebe 1 mit den Nuten zugewandt ist, ist länger als die andere, der Oberfläche der Eckenstrebe 1 weiter entfernten Seite der Einschuböffnung 4. Der Querschnitt der Einschuböffnung 4 ist entsprechend einem abgeschnittenen Dreieck mit an der Grundfläche angesetztem Rechteck entsprechend. Andere Ausgestaltungsformen der Einschuböffnung 4 sind für einen Fachmann einfach zu gestalten.

In Figur 4 ist eine Rückansicht, aber nicht wie in Figur 5 im Schnitt, des Details V aus Figur 3 dargestellt. Auch hier sind die Nuten 2 und 3 im Material der Eckenstrebe 1 dargestellt. Auch hier ist das Hinragen des Verschiebeweges 5 in die Nut 2 und das Hineinragen des Verschiebeweges 6 in die Nut 3 dargestellt. Die Verschiebwege 5 und 6 werden auch durch die Einschuböffnung 4 gebildet.

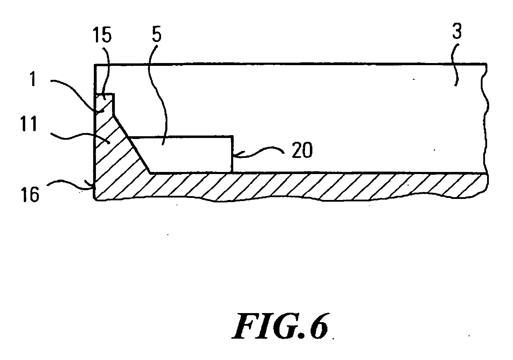

In Figur 6 ist ein Querschnitt durch die Nut 3 dargestellt. Dabei ist der Verschiebeweg 5 erkennbar. Auch ist erkennbar, dass die Einschuböffnung 4 und der damit verbundene Verschiebeweg 5 an einer Endfläche 20 enden. Die Nut 3 hat auf einer Seite der Eckenstrebe 1 einen Absatz 15, der ein Herausrutschen der Seitenwand aus der Eckenstrebe, in diesem Fall nach unten, d.h. zur Einschuböffnungsseite hin verhindert. Zweckmäßig ist eine Fortlassung eines Absatzes 15 auf der, der Einschuböffnungsseite 16 entgegenliegenden anderen Seite der Eckenstrebe 1, da dadurch ein Einschieben der Seitenwand in die Nut 3 ermöglicht wird. Die Nut 2 ist auf dieselbe Weise ausgestaltet. Zweckmäßig ist auch eine symmetrische Gestaltung der Nuten 2 und 3, wobei die Symmetrieachse zwischen den Nuten 2 und 3 liegt.

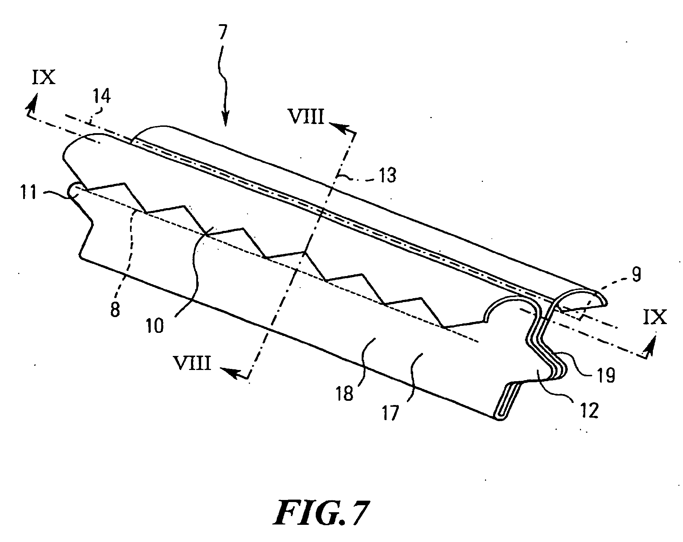

Figur 7 stellt eine Kontaktkralle 7 dar. Die Kontaktkralle 7 ist in diesem Ausführungsbeispiel aus einem Stanz-Biegeteil aus Federstahl aufgebaut. Die Kontaktkralle 7 hat zueinander parallele Schabkanten 8 und 9. Die Schabkanten 8 und 9 sind zu einer Symmetrieebene durch die Symmetrieachse 15 symmetrisch. Die Kontaktkralle 7 ist zu dieser Ebene ebenso symmetrisch. Auch ist die Kontaktkralle zu einer Ebene, welche eine Symmetrieachse 13 enthält, die zur Symmetrieachse 14 Orthogonal ist, symmetrisch.

Die Schabkanten 8 und 9 sind mehrfach gezackt. Die Zacken 10 zeigen in diesem Ausführungsbeispiel zum Äußeren der Kontaktkralle 7. Die Schabkanten 8 und 9 können aufeinander zubewegt werden, wobei eine Federkraft sie wieder in die Ausgangsposition zurückdrückt. Die Schabkanten sind über eine Verbindungsausbildung 17 miteinander verbunden. Die Verbindungsausbildung 17 besteht zum einen aus der Verbindungsfläche 18, die am Ende die Schabkante 8 aufweist und zum anderen aus der Verbindungsfläche 19, die an einem Ende die Schabkante 9 aufweist. Die Verbindungsflächen 18 und 19 sind miteinander verbunden. In den hier dargestellten speziellem Ausführungsbeispiel in Figur 7 besteht die Kontaktkralle aus einem Bauteil. Die Kontaktkralle 7 ist in diesem Ausführungsbeispiel aus einem Federstahlblech gefertigt. Die Kontaktkralle 7 weist auf beiden Seiten der Verbindungsfläche 17, an deren Enden, jeweils ein Vorsprung 11 und ein Vorsprung 12 auf. In diesem Ausführungsbeispiel, welches hier dargestellt ist, beinhaltet die Kontaktkralle sogar auf jeder Seite, respektive dem Ende der Kontaktkralle, zwei Vorsprünge 11 und zwei Vorsprünge 12. Die Vorsprünge 11 sind zueinander symmetrisch zu der Symmetrieebene durch eine Symmetrieachse 14. Die Vorsprünge 12 sind ebenso parallel zu dieser Ebene. Die Vorsprünge 11 sind einmal an der Verbindungsfläche 18 ausgeformt und einmal auf der Verbindungsfläche 19 in selber Höhe ausgeformt. Die Vorsprünge 12 sind zum einen an der Verbindungsfläche 18 und zum anderen an der Verbindungsfläche 19 in selber Höhe ausgeformt.

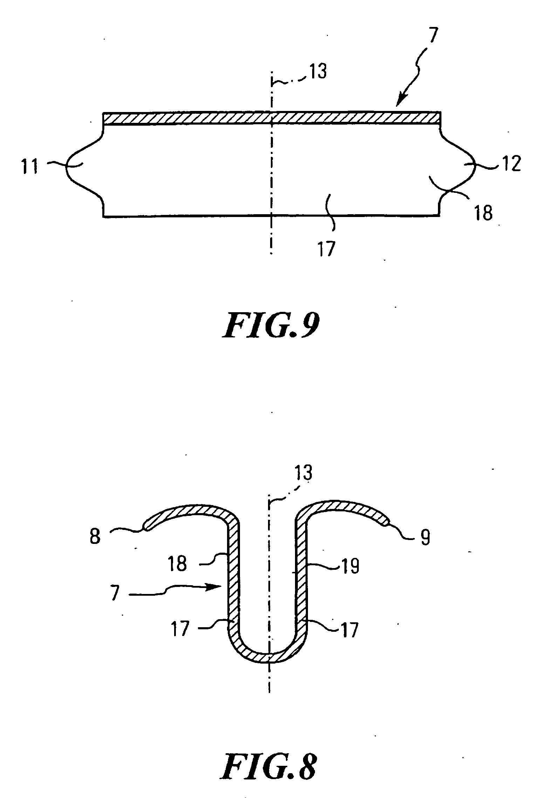

In Figur 8 ist ein Schnitt durch Figur 7 entlang der Symmetrieebene durch eine Symmetrieachse 13 dargestellt. Es sind die Schabkanten 8 und 9 sowie die Verbindungsausbildung 17, welche die Schabkanten 18 und 19 verbindet, dargestellt. Die Unterteilung der Verbindungsausbildung 17 in die Verbindungsfläche 18 und die Verbindungsfläche 19 ist ebenso ersichtlich. Die Verbindungsflächen 18 und 19 stoßen an der Symmetrieebene durch die Symmetrieachse 13 aneinander und sind hier miteinander verbunden. Die Kontaktkralle 7 besteht hier aus einem Bauteil.

In Figur 9 ist die Kontaktkralle an einer Seitenansicht in einem Schnitt dargestellt. Der Schnitt ist dabei parallel zu einer Symmetrieebene durch die Symmetrieachse 14. Diese Symmetrieebene der Kralle 7 ist bereits vorab erwähnt und beschrieben. In Figur 9 sind somit je ein Vorsprung 11 und ein Vorsprung der Vorsprünge 12 ersichtlich. Die Verbindungsfläche 18 formt dabei die Vorsprünge 11 und 12.

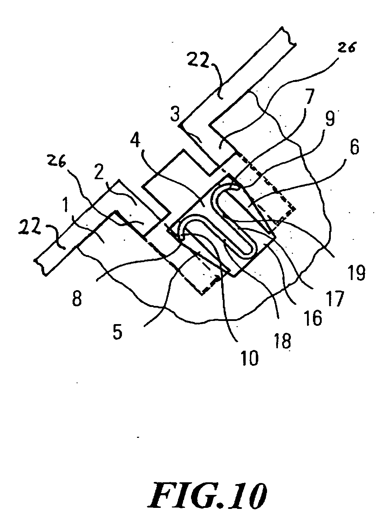

Figur 10 zeigt den eingebauten Zustand der Kontaktkralle 7 in die Einschuböffnung 4. Dabei Verklemmen sich die Schabkanten 5 und 6 in den Seitenwänden 22, welche in die Nuten 2 und 3 eingeschoben werden. Die Verbindungslinie zwischen Verbindungsfläche 18 und Verbindungsfläche 19 liegt dabei auf dem Boden der Einschuböffnung 4 auf. Der Boden der Einschuböffnung 4 ist dabei die Seite der Einschuböffnung 4, die der Oberfläche der Eckenstrebe 1 weiter entfernt ist als die andere. Die Seitenwände 22 sind aus Blech gefertigt und weisen Abkantungen 26 auf. Die eine Seitenwand 22 ist an einer Seite vorteilhafterweise zweimal um je 90° abgewinkelt. Die andere Seitenwand 22 ist an einer Seite vorteilhafterweise einmal um 90° abgewinkelt.

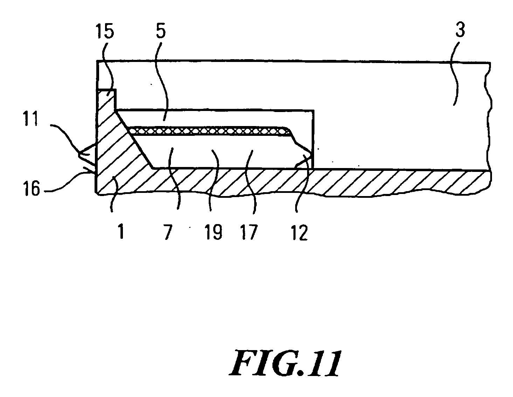

In Figur 11 ist die eingebaute Kontaktkralle 7 in die Einschuböffnung 4 mit dem Verschiebeweg 5 in der Nut 3 zu erkennen. Auch ist zu erkennen, dass der Vorsprung 11 aus der Eckenstrebe 1 hinausragt. Er steht somit über die Einschuböffnungsseite 16 hinaus.

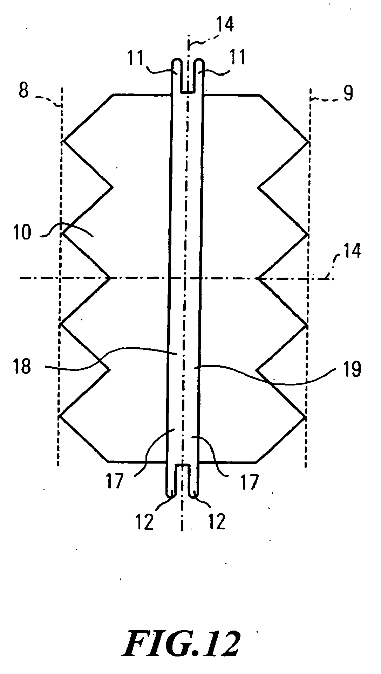

In Figur 12 ist eine Draufsicht auf die Kontaktkralle 7 dargestellt. Auch ist die Symmetrieachse 14 entlang der Längsachse der Kontaktkralle 7 dargestellt. Es ist ersichtlich, dass die Schabkanten 8 und 9 einander parallel sind. Auch ist ersichtlich, dass die Schabkanten 8 und 9 Zacken 10 aufweisen. Die Verbindungsausbildung 17 verbindet die Schabkante 8 mit der Schabkante 9. Die Verbindungsausbildung 17 ist aufgeteilt in die Verbindungsfläche 18 und die Verbindungsfläche 19, die miteinander fest verbunden sind. Diese Verbindung ist unlösbar. Die Vorsprünge 11 und die Vorsprünge 12 an den Verbindungsflächen 18 und 19 sind erkennbar.

Eine mögliche Einbauart ist das Einsetzen der Seitenwände in die Nuten 2 und 3. Dann wird die Kontaktkralle 7 in die Einschuböffnung 5 eingesetzt, wobei unter Umständen ein Hammer zur Hilfe genommen wird. Danach werden die Einbauteile an der Rückwand befestigt. Dabei drückt sich entweder der Vorsprung 12 oder der Vorsprung 11 in das Material der Rückwand hinein.

Dadurch entsteht eine elektrisch leitende Verbindung zwischen zwei Seitenteilen und einer Rückwand. Werden vier derartige Eckenstreben benutzt, so sind alle Seitenwände miteinander elektrisch leitend verbunden.

## Patentansprüche

1. Schrank, insbesondere Elektro-Schaltschrank, mit einer Eckenstrebe (1) mit zumindest zwei darin enthaltenen Nuten (2 und 3) und mit in die Nuten (2 und 3) einbringbaren einander benachbarten Seitenwänden aus elektrisch leitendem Material, **dadurch gekennzeichnet, dass** die Eckenstrebe (1) zumindest eine in zumindest einer der Nuten hineinragende Einschuböffnung (4) für eine Kontaktkralle (7) mit mindestens einem Verschiebeweg (5 oder 6) aufweist, wobei sich die Kontaktkralle (7) federnd, die Seitenwände elektrisch verbindend, an den Seitenwänden abstützt.

2. Elektro-Schaltschrank nach Anspruch 1, **dadurch gekennzeichnet, dass** die Kontaktralle (7) in eine Einschuböffnung (4) der Eckenstrebe (1) steckbar ist und zumindest zwei Seitenwände miteinander leitend verbindet.

3. Elektro-Schaltschrank nach einem der Ansprüche 1 bis 2, **dadurch gekennzeichnet, dass** die Kontaktkralle (7) zumindest zwei Schabkanten (8 und 9) aufweist, die ein Teil des Materials der Seitenwände verletzt.

4. Elektro-Schaltschrank nach einem der Ansprüche 1 bis 3, **dadurch gekennzeichnet, dass** die Kontaktkralle (7) zumindest einen Vorsprung (11 oder 12) hat, der aus der Eckenstrebe (1) hinausragend ausgestaltet ist und mit einer an einer Einschuböffnungsseite (16) der Eckenstrebe (1) angebrachten Seitenwand insbesondere einer Rückenwand, eine leitende Verbindung herstellend ausgestaltet ist.

5. Elektro-Schaltschrank nach einem der Ansprüche 1 bis 4, **dadurch gekennzeichnet, dass** die Schabkanten (8 und 9) der Kontaktkralle (7) nach überwinden einer Widerstandskraft aufeinander zu beweglich sind.

6. Elektro-Schaltschrank nach einem der Ansprüche 1 bis 5, **dadurch gekennzeichnet, dass** die Kontaktkralle (7) in der Einschuböffnung (4) verspannend ausgestaltet ist.

7. Elektro-Schaltschrank nach einem der Ansprüche 1 bis 6, **dadurch gekennzeichnet, dass** die Kontaktkralle (7) aus einem Bauteil gefertigt ist.

8. Elektro-Schaltschrank nach einem er Ansprüche 1 bis 7, **dadurch gekennzeichnet, dass** die Schabkanten (8 und 9) mit je einer Fläche der Kontaktkralle (7) verbunden sind.

9. Elektro-Schaltschrank nach einem der Ansprüche 1 bis 8, **dadurch gekennzeichnet, dass** die Schabkanten (8 und 9) zackig ausgestaltet sind.

10. Elektro-Schaltschrank nach einem der Ansprüche 1 bis 9, **dadurch gekennzeichnet, dass** zumindest ein Vorsprung (11 oder 12) durch eine Verbindungsausbildung (17) der mit je einer Schabkante (8 und 9) versehenen Fläche gebildet ist.

11. Elektro-Schaltschrank nach einem der Ansprüche 1 bis 10, **dadurch gekennzeichnet, dass** die Verbindungsausbildung (17) zumindest eine Verbindungsfläche (18 oder 19) umfasst.

12. Elektro-Schaltschrank nach einem der Ansprüche 1 bis 11, **dadurch gekennzeichnet, dass** die Verbindungsausbildung (17) zumindest zwei Verbindungsflächen (18 und 19) umfasst, wobei einerseits die eine Verbindungsfläche (18) an die eine Schabkante (8) und die andere Verbindungsfläche (19) anschließt und andererseits die andere Verbindungsfläche (19) zwischen der anderen Schabkante (9) und der ersteren Verbindungsfläche (18) angebracht ist.

13. Elektro-Schaltschrank nach einem der Ansprüche 1 bis 12, **dadurch gekennzeichnet, dass** die Kontaktkralle (7) aus einem Bauteil aufgebaut ist.

14. Elektro-Schaltschrank nach einem der Ansprüche 1 bis 13, **dadurch gekennzeichnet, dass** die Kontaktkralle (7) aus Metall aufgebaut ist.

15. Elektro-Schaltschrank nach einem der Ansprüche 1 bis 14, **dadurch gekennzeichnet, dass** die Kontaktkralle (7) aus Federstahl aufgebaut ist.'

16. Elektro-Schaltschrank nach einem der Ansprüche 1 bis 15, **dadurch gekennzeichnet, dass** die Kontaktkralle (7) aus einem Stanz-Biegeteil aufgebaut ist.

17. Elektro-Schaltschrank nach einem der Ansprüche 1 bis 16, **dadurch gekennzeichnet, dass** die Eckenstrebe (1) aus nichtleitendem Material aufgebaut ist.

18. Elektro-Schaltschrank nach einem der Ansprüche 1 bis 17, **dadurch gekennzeichnet, dass** die Eckenstrebe (1) aus Kunststoff aufgebaut ist.

19. Elektro-Schaltschrank nach einem der Ansprüche 1 bis 18, **dadurch gekennzeichnet, dass** die in die Einschuböffnung (4) einführbare Kontaktkralle (7) zumindest teilweise in zumindest eine der Nuten (2 und 3) ragt.

20. Elektro-Schaltschrank nach einem der Ansprüche 1 bis 19, **dadurch gekennzeichnet, dass** zumindest eine Schabkante (8 oder 9) in eine Nut (2 oder 3) ragt.

21. Elektro-Schaltschrank nach einem der Ansprüche 1 bis 20, **dadurch gekennzeichnet, dass** je eine Schabkante (8 und 9) in eine Nut (2 und 3) ragt.

22. Elektro-Schaltschrank nach einem der. Ansprüche 1 bis 21, **dadurch gekennzeichnet, dass** die Kontaktkralle (7) symmetrisch aufgebaut ist.

23. Elektro-Schaltschrank nach einem der Ansprüche 1 bis 22, **dadurch gekennzeichnet, dass** die Kontaktkralle (7) zu zwei zueinander orthogonalen Ebenen entlang Symmetrieachsen (13 und 14) spiegelsymmetrisch aufgebaut ist.

## Claims

1. Cabinet, in particular electrical switchgear cabinet, having a corner strut (1) with at least two grooves (2 and 3) which are contained therein and having side walls which can be made in the grooves (2 and 3), are adjacent to one another and are composed of electrically conductive material, **characterized in that** the corner strut (1) has at least one insert opening (4), which projects into at least one of the grooves, for a contact claw (7) with at least one movement path (5 or 6), wherein the contact claw (7) is supported against the side walls with a spring action so as to electrically connect the side walls.

2. Electrical switchgear cabinet according to Claim 1, **characterized in that** the contact claw (7) can be inserted into an insert opening (4) in the corner strut (1) and conductively connects at least two side walls to one another.

3. Electrical switchgear cabinet according to one of Claims 1 and 2, **characterized in that** the contact claw (7) has at least two scraping edges (8 and 9) which damage some of the material of the side walls.

4. Electrical switchgear cabinet according to one of Claims 1 to 3, **characterized in that** the contact claw (7) has at least one projection (11 or 12) which is designed such that it protrudes out of the corner strut (1) and is designed such that it establishes a conductive connection to a side wall, in particular a rear wall, which is arranged on an insertion opening side (16) of the corner strut (1).

5. Electrical switchgear cabinet according to one of Claims 1 to 4, **characterized in that** the scraping edges (8 and 9) of the contact claw (7) can move towards one another after a resistance force is overcome.

6. Electrical switchgear cabinet according to one of Claims 1 to 5, **characterized in that** the contact claw (7) is designed such that it is braced in the insert opening (4).

7. Electrical switchgear cabinet according to one of Claims 1 to 6, **characterized in that** the contact claw (7) is produced from one component.

8. Electrical switchgear cabinet according to one of Claims 1 to 7, **characterized in that** the scraping edges (8 and 9) are connected to in each case one area of the contact claw (7).

9. Electrical switchgear cabinet according to one of Claims 1 to 8, **characterized in that** the scraping edges (8 and 9) are of serrated design.

10. Electrical switchgear cabinet according to one of Claims 1 to 9, **characterized in that** at least one projection (11 or 12) is formed by a connecting formation (17) of the area which is provided with in each case one scraping edge (8 and 9).

11. Electrical switchgear cabinet according to one of Claims 1 to 10, **characterized in that** the connecting formation (17) comprises at least one connecting area (18 or 19).

12. Electrical switchgear cabinet according to one of Claims 1 to 11, **characterized in that** the connecting formation (17) comprises at least two connecting areas (18 and 19), wherein firstly one connecting area (18) adjoins one scraping edge (8) and the other connecting area (19), and secondly the other connecting area (19) is arranged between the other scraping edge (9) and the first connecting area (18).

13. Electrical switchgear cabinet according to one of Claims 1 to 12, **characterized in that** the contact claw (7) is constructed from one component.

14. Electrical switchgear cabinet according to one of Claims 1 to 13, **characterized in that** the contact claw (7) is constructed from metal.

15. Electrical switchgear cabinet according to one of Claims 1 to 14, **characterized in that** the contact claw (7) is constructed from spring steel.

16. Electrical switchgear cabinet according to one of Claims 1 to 15, **characterized in that** the contact claw (7) is constructed from a stamped and bent part.

17. Electrical switchgear cabinet according to one of Claims 1 to 16, **characterized in that** the corner strut (1) is constructed from non-conductive material.

18. Electrical switchgear cabinet according to one of Claims 1 to 17, **characterized in that** the corner strut (1) is constructed from plastic.

19. Electrical switchgear cabinet according to one of Claims 1 to 18, **characterized in that** the contact claw (7) which can be inserted into the insert opening (4) at least partially protrudes into at least one of the grooves (2 and 3).

20. Electrical switchgear cabinet according to one of Claims 1 to 19, **characterized in that** at least one scraping edge (8 or 9) protrudes into a groove (2 or 3).

21. Electrical switchgear cabinet according to one of Claims 1 to 20, **characterized in that** each scraping edge (8 and 9) protrudes into a groove (2 and 3).

22. Electrical switchgear cabinet according to one of Claims 1 to 21, **characterized in that** the contact claw (7) is of symmetrical construction.

23. Electrical switchgear cabinet according to one of Claims 1 to 22, **characterized in that** the contact claw (7) is constructed such that it has mirror-image symmetry along axes (13 and 14) of symmetry with respect to two planes which are orthogonal in relation to one another.

## Revendications

1. Armoire, notamment armoire électrique, avec un montant en équerre (1) avec au moins deux rainures (2 et 3) pratiquées dans celui-ci et avec des parois latérales en matériau électriquement conducteur voisines l'une de l'autre insérables dans les rainures (2 et 3), **caractérisée en ce que** le montant en équerre (1) présente au moins une ouverture d'insertion (4) pénétrant dans au moins une des rainures pour une griffe de contact (7) avec au moins un chemin de glissement (5 ou 6), dans lequel la griffe de contact (7) prend appui élastiquement sur les parois latérales, en reliant électriquement les parois latérales.

2. Armoire électrique selon la revendication 1, **caractérisée en ce que** la griffe de contact (7) peut être engagée dans une ouverture d'insertion (4) du montant en équerre (1) et raccorde l'une à l'autre de façon conductrice au moins deux parois latérales.

3. Armoire électrique selon l'une des revendications 1 à 2, **caractérisée en ce que** la griffe de contact (7) présente au moins deux bords de raclage (8 et 9), qui entament une partie du matériau des parois latérales.

4. Armoire électrique selon l'une quelconque des revendications 1 à 3, **caractérisée en ce que** la griffe de contact (7) comporte au moins une saillie (11 ou 12), qui est saillante hors du montant en équerre (1) et qui est réalisée avec une paroi latérale, en particulier une paroi arrière, placée sur un côté (16) d'ouverture d'insertion du montant en équerre (1), en établissant un raccordement conducteur.

5. Armoire électrique selon l'une quelconque des revendications 1 à 4, **caractérisée en ce que** les bords de raclage (8 et 9) de la griffe de contact (7) sont mobiles l'un vers l'autre après avoir surmonté une force de résistance.

6. Armoire électrique selon l'une quelconque des revendications 1 à 5, **caractérisée en ce que** la griffe de contact (7) est configurée sous contrainte dans l'ouverture d'insertion (4).

7. Armoire électrique selon l'une quelconque des revendications 1 à 6, **caractérisée en ce que** la griffe de contact (7) est fabriquée d'un seul tenant.

8. Armoire électrique selon l'une quelconque des revendications 1 à 7, **caractérisée en ce que** les bords de raclage (8 et 9) sont reliés chacun à une face de la griffe de contact (7).

9. Armoire électrique selon l'une quelconque des revendications 1 à 8, **caractérisée en ce que** les bords de raclage (8 et 9) sont réalisés sous forme crénelée.

10. Armoire électrique selon l'une quelconque des revendications 1 à 9, **caractérisée en ce qu'**au moins une saillie (11 ou 12) est formée par une déformation (17) de liaison de la face respectivement dotée d'un bord de raclage (8 et 9).

11. Armoire électrique selon l'une quelconque des revendications 1 à 10, **caractérisée en ce que** la déformation de liaison (17) comprend au moins une face de liaison (18 ou 19).

12. Armoire électrique selon l'une quelconque des revendications 1 à 11, **caractérisée en ce que** la déformation de liaison (17) comprend au moins deux faces de liaison (18 et 19), dans laquelle d'une part ladite une face de liaison (18) se raccorde audit un bord de raclage (8) et à l'autre face de liaison (19) et d'autre part l'autre face de liaison (19) est placée entre l'autre bord de raclage (9) et la première face de liaison (18).

13. Armoire électrique selon l'une quelconque des revendications 1 à 12, **caractérisée en ce que** la griffe de contact (7) est fabriquée d'un seul tenant.

14. Armoire électrique selon l'une quelconque des revendications 1 à 13, **caractérisée en ce que** la griffe de contact (7) est fabriquée en métal.

15. Armoire électrique selon l'une quelconque des revendications 1 à 14, **caractérisée en ce que** la griffe de contact (7) est fabriquée en acier à ressort.

16. Armoire électrique selon l'une quelconque des revendications 1 à 15, **caractérisée en ce que** la griffe de contact (7) est fabriquée à partir d'une pièce pliée par estampage.

17. Armoire électrique selon l'une quelconque des revendications 1 à 16, **caractérisée en ce que** le montant en équerre (1) est fabriqué en matériau non conducteur.

18. Armoire électrique selon l'une quelconque des revendications 1 à 17, **caractérisée en ce que** le montant en équerre (1) est fabriqué en matière plastique.

19. Armoire électrique selon l'une quelconque des revendications 1 à 18, **caractérisée en ce que** la griffe de contact (7) insérable dans l'ouverture d'insertion (4) pénètre au moins partiellement dans au moins une des rainures (2 et 3).

20. Armoire électrique selon l'une quelconque des revendications 1 à 19, **caractérisée en ce qu'**au moins un bord de raclage (8 ou 9) pénètre dans une rainure (2 ou 3).

21. Armoire électrique selon l'une quelconque des revendications 1 à 20, **caractérisée en ce que** chacun des bords de raclage (8 et 9) pénètre dans une rainure (2 et 3).

22. Armoire électrique selon l'une quelconque des revendications 1 à 21, **caractérisée en ce que** la griffe de contact (7) est de forme symétrique.

23. Armoire électrique selon l'une quelconque des revendications 1 à 22, **caractérisée en ce que** la griffe de contact (7) est de forme symétrique par rapport à deux plans orthogonaux l'un à l'autre le long d'axes de symétrie (13 et 14).
